# EUROPÄISCHE PATENTANMELDUNG

(11) **EP 2 478 798 A1**
(43) Veröffentlichungstag der Anmeldung: **25.07.2012**
(21) Anmeldenummer: 12151237.0
(22) Anmeldetag: 16.01.2012
(51) Int. Cl.: A47F 3/04, F25D 17/04, A23L 3/28, A23L 3/36

(54) **Vorrichtung zur Kühlung von Lebensmitteln**

(30) Priorität: 25.01.2011 DE 102011000313; 25.01.2011 DE 202011000176 U; 07.02.2011 DE 102011000545; 07.02.2011 DE 202011003194 U
(71) Anmelder: Hilberer, Franz, 78234 Engen (DE)
(72) Erfinder: Hilberer, Franz, 78234 Engen (DE)
(74) Vertreter: Arat, Dogan

(57) **Zusammenfassung**

Bei einer Vorrichtung (1) zur Kühlung von Lebensmitteln
- mit einer Arbeitsplatte (2),
- mit einem Ventilator (17),
- mit einem Verdampfer (16),
soll der Ventilator (17), der Verdampfer (16) und ein UV-C-Luftentkeimungsgerät (20) unterhalb der Arbeitsplatte (2) angebracht sein.

## Beschreibung

### Gebiet der Erfindung

Die Erfindung betrifft eine Vorrichtung zur Kühlung von Lebensmitteln nach dem Oberbegriff des Anspruchs 1, sowie eine Verwendung hierfür.

### Stand der Technik

Aus dem Stand der Technik sind verschiedene Vorrichtungen zur Kühlung von Lebensmitteln bekannt. In diesem Zusammenhang wird insbesondere auf die DE 20 2005 006 835 U1 hingewiesen. Dort ist eine Vorrichtung zur Kühlung einer Arbeitsplatte offenbart, wobei ein Ventilator und ein Verdampfer in einem einzigen Gehäuse integriert sind. Bei diesem Gehäuse handelt es sich um ein von einer Arbeitsplatte unabhängiges Gehäuse, welches nach Bedarf auf die Arbeitsplatte aufgesetzt und eingeschaltet wird. Sie ist nicht integrierter Bestandteil der Arbeitsplatte. Nachteilig an diesem Stand der Technik ist der Umstand, dass bei einer aufgesetzten Vorrichtung immer wieder Konfiskatreste zwischen die Vorrichtung und die Arbeitsplatte geraten. Dort ist auf Grund der Wärmeentwicklung, sowie der Dunkelheit ein idealer Nährboden für Bakterien und Mikroben. In der Praxis hat sich ausserdem als nachteilig erwiesen, dass zwar die Luft oberhalb der Arbeitsplatte gekühlt wird, doch die Arbeitsplatte selbst nicht gekühlt ist. Dadurch erhöht sich das Risiko eines bakteriellen oder mikrobiellen Befalls der Arbeitsplatte.

Ausserdem ist aus der DE 296 01 714 U1 bereits eine Kältearbeitsplatte für verderbliche Lebensmittel bekannt. Diese bekannte Kältearbeitsplatte ist als steckerfertiges Kältesystem ausgeführt, mit dem sich mittels Kühlen von Wasser in einem Behältnis eine gleichmässige, harte Eisschicht erzeugen lässt, die ein Schneiden auf deren Oberfläche zulässt. Die Arbeitsplatte kann in der Grösse individuell angefertigt werden. Sie mit einem in Schleifen gebogenen Rohr für Kühlflüssigkeit ausgestattet, welches am Anschluss mit einer selbstdichtenden Bajonettkupplung versehen ist. Weiterhin verfügt Sie über abgewinkelte Schutz- bzw. Stabilisatorbleche, wodurch einerseits eine mechanische Beschädigung der Kühlschleife vermieden wird und andererseits eine grössere Stabilität des Gefrierguts erreicht wird. Ferner ist sie mit einem Ablaufanschluss für Tauwasser ausgestattet und besteht aus nicht rostendem, lebensmittelverträglichem Material. Allerdings kommt es hierbei zu Fleischbrand und zu einer frühzeitigen Abstumpfung von Messern. Ausserdem entsteht aufgrund des Schmelzwassers ein Hygieneproblem mit kontaminiertem Fleisch.

Weiterhin ist aus der EP1 348 339 A2 eine Arbeitsfläche zur Verarbeitung von Lebensmitteln bekannt, bei der wenigstens ein Teil der Arbeitsfläche als gekühlte Fläche ausgebildet ist. Diese eignet sich insbesondere zur Bearbeitung von Lebensmitteln tierischer Herkunft, vorzugsweise zum Schneiden, Trennen, Hacken oder sonstigem Zerteilen von Fleisch oder Fisch. Die Arbeitsfläche ist im Einflussbereich eines Wärmetauschers angeordnet, der mit einem Kühlaggregat in Verbindung steht. Der Wärmetauscher ist als eine von flüssigem Kühlmittel durchflossene Kühlschlange ausgebildet, die mit dem Kühlaggregat kühlmittelleitend verbunden ist. Die gekühlte Fläche selbst ist beispielsweise aus einem schnittfesten Kunststoff, aus einem lebensmittelverträglichen Metall, vorzugsweise Edelstahl, aus Holz, vorzugsweise Hartholz, aus Keramikmaterial oder aus einem anderen lebensmittelverträglichen Material gefertigt.

Die DE 296 01 714 U1 und die EP 1 348 339 A2 sind kompliziert aufgebaut. Die Kühlvorrichtung ist hier zwar teilweise integrierter Bestandteil der Arbeitsplatte, doch ist nicht erkennbar, wie die Luft oberhalb der Arbeitsplatte gekühlt werden kann.

### Aufgabe der Erfindung

Aufgabe der Erfindung soll es sein, eine Vorrichtung zum Kühlen von Lebensmitteln zur Verfügung zu stellen, welche einen einfachen Aufbau aufweist und die Arbeitsplatte, sowie die Luft oberhalb der Arbeitsplatte kühlt und hierbei möglichst eine entkeimte Luft zum Einsatz kommt und eine Umluft in der Weise gestaltet ist, dass die Luft über der gesamten Arbeitsplatte in gleicher Weise gekühlt wird.

### Lösung der Aufgabe

Zur Lösung der Aufgabe führt der kennzeichnende Teil des Anspruchs 1. Vorteilhafte Ausgestaltungen und Weiterbildungen der Erfindungen sind in den abhängigen Ansprüchen angegeben.

Eine erfindungsgemässe Vorrichtung zur Kühlung von Lebensmitteln weist einen Ventilator auf. Dieser Ventilator ist in der Weise gestaltet, dass er auf der einen Seite die Luft ansaugt und auf der anderen Seite die Luft wegbläst. Dies führt zu dem vorteilhaften Umstand, dass eine ständige Umluft über der Arbeitsplatte erreicht werden kann. Die eine Seite ist hierbei die Seite, auf der die Luft wieder unter die Arbeitsplatte geführt wird. Die andere Seite ist die Seite, auf der die Luft wieder von unterhalb der Arbeitsplatte nach oben geführt wird.

Ein weiteres Ausführungsbeispiel einer erfindungsgemässen Vorrichtung weist einen Verdampfer auf. Dieser Verdampfer dient der Verdampfungskühlung. Der Verdampfer kühlt die vom Ventilator umgewälzte Luft auf eine vom Nutzer bevorzugte Temperatur. In diesem Zusammenhang ist auch von Vorteil, dass der Verdampfer selbst in einem bestimmten Bereich abkühlt.

Eine erfindungsgemässe Vorrichtung weist ausserdem eine Arbeitsplatte auf. Diese Arbeitsplatte ist aus einem lebensmittelverträglichen Material hergestellt. Dabei kann es sich um Kunststoff, Metall, Holz oder Keramik handeln. Sie bietet dem Nutzer eine vorteilhafte Grundlage für die anfallenden Schneidetätigkeiten. Die Arbeitsplatte ist in einem bevorzugten Ausführungsbeispiel abnehmbar oder abklappbar mit der Vorrichtung verbunden. Dies ist in der Weise vorteilhaft, als dass bei einer Abnutzung der Arbeitsplatte ein Austausch vorgenommen werden kann. Ausserdem vereinfacht eine abnehmbare Arbeitsplatte die spätere Reinigung. Eine abklappbare Arbeitsplatte wiederum hätte den Vorteil, dass sie beispielsweise nach der Reinigung mit Wasser hochgestellt werden könnte, damit das genutzte Wasser besser abfliesst. Die Verstellung der Arbeitsplatte in der Neigung ist optional stufenlos möglich. Dies kann beispielsweise durch eine Hydraulik erfolgen.

Eine erfindungsgemässe Vorrichtung weist ausserdem ein UV-C-Luftentkeimungsgerät auf. Dieses Luftentkeimungsgerät entkeimt die vom Ventilator umgewälzte und vom Verdampfer gekühlte Luft in der Weise, als dass eine UV-C-Lichtquelle von der aus dem Ventilator strömenden Luft in einem bestimmten Bereich vor Auftreffen auf die Arbeitsplatte entkeimt wird. Hierbei erfolgt eine Reinigung von unerwünschten Keimen, Viren, Hefen und Schimmelsporen. Durch die Anbringung des UV-C-Luftentkeimungsgeräts unterhalb der Arbeitsplatte werden Personen und Lebensmittel von der direkten Bestrahlung geschützt.

Die erfindungsgemässe Vorrichtung ist ausserdem in der Weise gestaltet, dass der Ventilator, der Verdampfer und das UV-C-Luftentkeimungsgerät unterhalb der Arbeitsplatte angebracht sind. Dies ist von Vorteil, da der Verdampfer in der Weise angeordnet ist, dass die vom Verdampfer abgegebene Kälte direkt auf die Unterseite der Arbeitsplatte einwirkt. Ausserdem ist es einfacher einen Umlufteffekt zu erreichen, wenn der Ventilator unterhalb der Arbeitsplatte angeordnet ist. Dies resultiert aus dem Umstand, dass die auf der einen Seite durch einen Luftauslass hinaus geblasene entkeimte Luft schwerer ist als warme Luft und dadurch auf der Arbeitsplatte aufliegt. Es ist wiederum auch einfacher, dass kalte Luft durch das Erzeugen von Unterdruck an einem Lufteinsog wiederum dem Ventilator und dem Verdampfer zugeführt werden kann.

Bei einer anderen Ausführungsform sind der Luftauslass und der Lufteinsog jeweils an einer gegenüberliegenden Seite der Arbeitsplatte angeordnet, so dass ein effektiver Umlufteffekt entsteht.

Ein erfindungsgemässes Ausführungsbeispiel einer Vorrichtung weist ausserdem eine Rechnersteuerung zur Aufrechterhaltung einer vorbestimmten Temperatur der Arbeitsplatte und der Luft oberhalb der Arbeitsplatte auf. Dies geschieht in der Weise, dass ständig die einströmende Luft am Lufteinsog und am Luftauslass gemessen wird, um eine immer gleich bleibende Temperatur zu gewährleisten. Der Verdampfer wird entsprechend durch die Rechnersteuerung angefahren. Die Rechnersteuerung wirkt hier ähnlich einem Thermostat. Sie hat aber ausserdem für verschiedene Lebensmittel hinterlegte Temperaturen. Der Nutzer kann optional durch Eingabe des zu bearbeitenden Lebensmittels die optimale Temperatur unter Anpassung der ebenfalls gemessenen allgemeinen Temperatur im Raum nutzen. Dies ist in der Weise vorteilhaft, als das der Nutzer nicht mehr eine entsprechende manuelle Einstellung vornehmen muss. Eine entsprechende Regulierung findet durch die Rechnersteuerung statt.

In einem anderen erfindungsgemässen Ausführungsbeispiel wird die Rechnersteuerung über einen Eingabebereich bedient. Hierbei können beispielsweise Symbole für Fisch oder verschiedene Arten von Fisch, sowie verschiedene Arten von Fleisch hinterlegt, welche der Nutzer in einfacher Weise durch Drücken und Bestimmen des zu bearbeitenden Fleisches wählen kann. Ausserden kann aber auch eine simple Temperatureinstellung zum Einsatz kommen, welche lediglich mit je einer +/- Taste und einer Anzeige versehen ist. Hier kann der Nutzer eine gewünschte Temperatur durch Drücken der jeweiligen +/- Taste wählen. Die restliche Anpassung der optimalen Temperatur erfolgt dann durch die Rechnersteuerung, welche wiederum den Verdampfer und den Ventilator antreibt.

Ein erfindungsgemässes Ausführungsbeispiel weist ausserdem ein gekühltes Behältnis für Konfiskat auf. Dieses Behältnis ist ebenfalls unterhalb der Arbeitsplatte angebracht, so dass während der Bearbeitung anfallendes Konfiskat über einen Abwurf direkt in das Behältnis gelangt. Hierbei ist aufgrund der Anbringung des Verdampfers und der dort ausstrahlenden Kälte eine Kühlung des Behältnisses, des Abwurfs und damit des Konfiskats erreicht, was wiederum vorteilhaft auf die Hygiene der gesamten Vorrichtung auswirkt.

Ein erfindungsgemässes Ausführungsbeispiel umfasst ausserdem eine herausnehmbare Kondensschale. Diese herausnehmbare Kondensschale dient dem Auffangen von Kondenswasser, welches sich beispielsweise auf der Unterseite der Arbeitsplatte oder bei der Abkühlung der erwärmten Luft entsteht.

Ein erfindungsgemässes Ausführungsbeispiel ist bevorzugt aus ChromNickelstahl hergestellt. Dies ist in der Weise vorteilhaft, als dass eine Reinigung vereinfacht wird. Chrom- Nickelstahl ist als Oberfläche widerstandsfähig und erfüllt ausserdem die Ansprüche an eine ästhetische Gestaltung der Vorrichtung.

Das erfindungsgemässe Ausführungsbeispiel ist ausserdem in der Weise gestaltet, dass ein hochklappbarer Verdampfer umfasst ist. Dies bedeutet beispielsweise, dass nach Abnahme der Arbeitsplatte der Verdampfer aus der Vorrichtung herausklappbar ist. Dies hat den Vorteil, dass eine Reinigung des Verdampfers und auch des Bereichs unter dem Verdampfer einfach möglich ist. Ebenso ist es auf diese Weise vereinfacht, den Verdampfer auszutauschen oder zu reparieren.

Ein anderes erfindungsgemässes Ausführungsbeispiel der Vorrichtung arbeitet bevorzugt zwischen +3° und -8° Celsius, noch bevorzugter zwischen +5° und - 12° Celsius und am bevorzugtesten zwischen +8° und -15° Celsius. In diesen Temperaturen können Lebensmittel je nach Eigenschaft und Umgebungstemperatur am besten bearbeitet, präsentiert oder haltbar gemacht werden. Insbesondere soll aber eine Kühlleistung zwischen + 3°C und + 8°C erreicht werden.

Die erfindungsgemässe Rechnersteuerung verfügt ausserdem über eine automatische Abtauung. Dies bedeutet im Einzelnen beispielsweise, dass eine regelmässige Abtauung die Bildung von Eis an einzelnen Teilen verhindert, was wiederum zu einer hygienischen Nutzung und einer längeren Lebensdauer führt.

Die erfindungsgemässe Vorrichtung verfügt ausserdem optional über eine Abdeckklappe, welche über die Arbeitsplatte gelegt werden kann. Diese Abdeckklappe kann ebenfalls aus Chrom- Nickelstahl oder aus Kunststoff hergestellt sein. Gerade zu Präsentationszwecken ist es vorteilhaft, durchsichtigen Kunststoff oder Glas zum Einsatz zu bringen.

Ein erfindungsgemässes Ausführungsbeispiel einer Vorrichtung zur Kühlung von Lebensmitteln kann auch in der Weise ausgestaltet sein, dass die Arbeitsfläche in verschiedene Bereiche eingeteilt ist. Beispielsweise kann die Hälfte der Arbeitsfläche aus Kunststoff und die andere Hälfte aus Metall oder kältespeicherndem Marmor ausgebildet sein. Es ist vorteilhaft, Teilarbeitsflächen aus verschiedenen Materialien zur Verfügung zu stellen, um eine optimale Anpassung an die Bedürfnisse des jeweiligen Nutzers zu gewährleisten.

Ein anderes erfindungsgemässes Ausführungsbeispiel der Vorrichtung umfasst ausserdem Rollen. Diese Rollen verfügen wiederum über einen Feststellmechanismus. Sie haben den Vorteil, dass die Vorrichtung von einem Nutzer auf einfache Art und Weise zu jedem beliebigen Ort geschoben werden kann.

Weiterhin umfasst ein erfindungsgemässes Ausführungsbeispiel optional ein Hustenschutzglas, welches abnehmbar oder aufklappbar auf der Arbeitsplatte aufliegt. Das Hustenschutzglas kann beispielsweise durch Hydraulikelemente bis zu einem gewissen Winkel aufgestellt werden, so dass der Nutzer auf der Arbeitsplatte das entsprechende Lebensmittel be- oder verarbeiten kann, während auf der anderen Seite des Hustenschutzglases Zuschauer anwesend sein können. Hierbei ist vorteilhaft, dass trotz der Nähe ein optimaler Schutz vor Kontamination mit Bakterien od. dgl. verhindert wird.

Die erfindungsgemässe Vorrichtung weist ausserdem einen integrierten Anschluss für eine Reinigungsbrause auf. Diese Reinigungsbrause dient dem Nutzer zur Reinigung der Arbeitsplatte am Ende eines Arbeitstages oder eines Arbeitsgangs. Sie wird durch eine externe Wasserquelle gespeist.

Die erfindungsgemässe Vorrichtung weist folgende nicht abschliessende Beispielsmasse auf. So ist bei einer Arbeitsfläche mit einer Breite zwischen 650 mm und 800 mm und einer Tiefe zwischen 600 mm und 750 mm, eine Gesamtbreite der Vorrichtung zwischen 750 mm und 910 mm sowie eine Gesamttiefe zwischen 630 mm und 790 mm vorhanden. Ein besonders bevorzugtes Ausführungsbeispiel weist bei der Arbeitsplatte eine Breite von 725 mm und eine Tiefe von 675 mm auf. Die Vorrichtung weist dabei eine Gesamtbreite von 830 mm und eine Gesamttiefe von 710 mm auf.

Ein anderes Ausführungsbeispiel ist in der Weise gestaltet, dass die Arbeitsplatte eine Breite zwischen 1000 mm und 1200 mm und eine dazugehörige Tiefe von 600 mm bis 750 mm aufweist. Dabei ist die Gesamtbreite der Vorrichtung zwischen 1100 mm und 1300 mm anzusetzen sowie die Gesamttiefe der Vorrichtung zwischen 630 mm und 790 mm. Bei einem besonders bevorzugten Ausführungsbeispiel weist die Arbeitsplatte eine Breite von 1090 mm und eine Tiefe von 675 mm auf. Die Gesamtvorrichtung weist hierbei eine Gesamtbreite von 1200 mm und eine Gesamttiefe von 710 mm auf. Bei diesen Massen handelt es sich um für einen Nutzer einfach zu transportierende und zu bearbeitende Masse. Die Arbeitshöhe der Arbeitsplatte ist in der Regel zwischen 850 mm und 900 mm, bevorzugt 870 mm, noch bevorzugter 800 mm bis 1000 mm gestaltet.

Ein erfindungsgemässes Ausführungsbeispiel weist einen gestuften Auswurf für die vom Verdampfer gekühlte und vom Ventilator ausgestossene Luft auf. Dieser gestufte Auswurf ist in der Weise gestaltet, dass die gesamte Arbeitsplatte mit kalter Luft umgeben ist. Der gestufte Auswurf wird je nach Grösse der Arbeitsplatte voreingestellt, um eine entsprechende optimale Kühlung zu erreichen. Ein anderes Ausführungsbeispiel überlässt dem Nutzer hierbei eine geringe Einstellmöglichkeit. Vorteilhaft hierbei ist, dass aufgrund vorher bestimmter Versuche in Bezug auf die Grösse der Arbeitsplatte eine optimale Abstimmung des gestuften Auswurfs eingestellt wird, um die gesamte Arbeitsplatte mit kalter Luft zu beaufschlagen.

Ein erfindungsgemässer Lufteinsog ist in Form von Lufteinsogschlitzen vorgesehen. Diese Lufteinsogschlitze sollen dazu dienen, gössere Reste von

Konfiskat, welche versehentlich auf den Lufteinsog geraten, von einem Eindringen in den Bereich unterhalb der Arbeitsplatte fernzuhalten. Ausserdem sollen die Lufteinsogschlitze in der Weise gestaltet sein, dass ein unterhalb der Lufteinsogschlitze vorhandener Unterdruck die kalte Luft von oberhalb der Arbeitsplatte anzieht und dem Ventilator und dem Verdampfer zuführt.

### Figurenbeschreibung

### Kurze Beschreibung der Zeichnungen

Weitere Vorteile, Merkmale und Einzelheiten der Erfindung ergeben sich aus den nachfolgenden Beschreibungen bevorzugter Ausführungsbeispiele sowie anhand der Zeichnungen; diese zeigen in
Figur 1 eine Seitenansicht der erfindungsgemässen Vorrichtung;
Figur 2 eine Draufsicht auf eine Vorrichtung nach Figur 1;
Figur 3 eine geschnittene Seitenansicht der Figur 1;
Figur 4 eine Seitenansicht eines anderen Ausführungsbeispiels der Vorrichtung nach Figur 1.

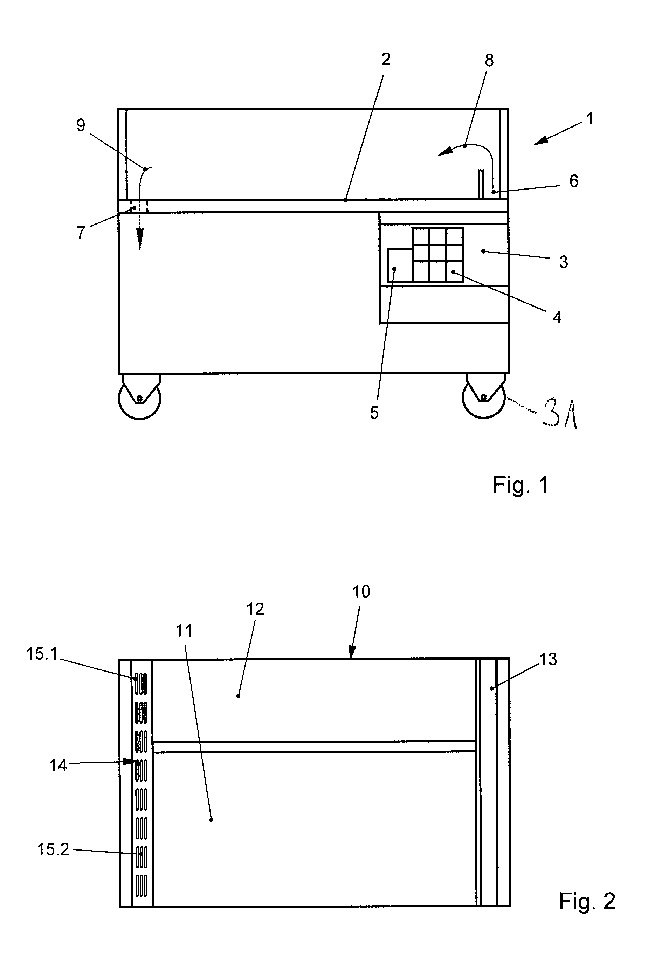

In Figur 1 ist zunächst eine Vorrichtung 1 zur Kühlung von Lebensmitteln gezeigt. Diese Vorrichtung 1 verfügt über eine Arbeitsplatte 2. Unterhalb der Arbeitsplatte 2 ist ein Eingabebereich 3 zu erkennen, welcher über ein Tastenfeld 4 sowie ein Temperaturanzeigefeld 5 verfügt. Hierbei sind auf den Tasten des Tastenfelds 4 entweder verschiedene Temperaturen oder Lebensmittel aufgezeigt, welcher der Nutzer durch Drücken auswählt. Der Temperaturanzeigebereich 5 dient dem Nutzer zur Überprüfung der tatsächlichen Temperatur der Luft oberhalb der Arbeitsplatte 2. Diese kann digital oder analog gestaltet sein. Ausserdem ist in Figur 1 ein Luftauslass 6, sowie ein Lufteinsog 7 gezeigt. Oberhalb des Luftauslasses 6 ist ein Pfeil 8 gezeigt, welcher schematisch andeuten soll, wie die kalte Luft aus dem Bereich unterhalb der Arbeitsplatte in den Bereich oberhalb der Arbeitsplatte gebracht wird. Beim Lufteinsog 7 ist ein teilweise gestrichelt dargestellter Pfeil 9 gezeigt, welcher wiederum darstellen soll, wie die abgeführte kalte Luft durch den Lufteinsog 7 in den Bereich unterhalb der Arbeitsplatte 2 eingesogen wird. Ausserdem ist in der Figur 1 eine Anzahl von Rollen 31 gezeigt, welche zur besseren Fortbewegung der Vorrichtung 1 angebracht sind.

In Figur 2 ist eine Draufsicht auf eine Arbeitsplatte 10 gezeigt. Diese Arbeitsplatte 10 ist unterteilt in eine Teilfläche 11 und in eine andere Teilfläche 12. Hierbei können die entsprechenden Teilflächen 11, 12 aus unterschiedlichen Materialien gestaltet sein. Ausserdem finden sich in der Ansicht von Figur 2 ein Luftauslass 13 und ein Lufteinsog 14, welcher eine unbestimmte Zahl von Lufteinsogschlitzen 15.1 und 15.2 aufweist.

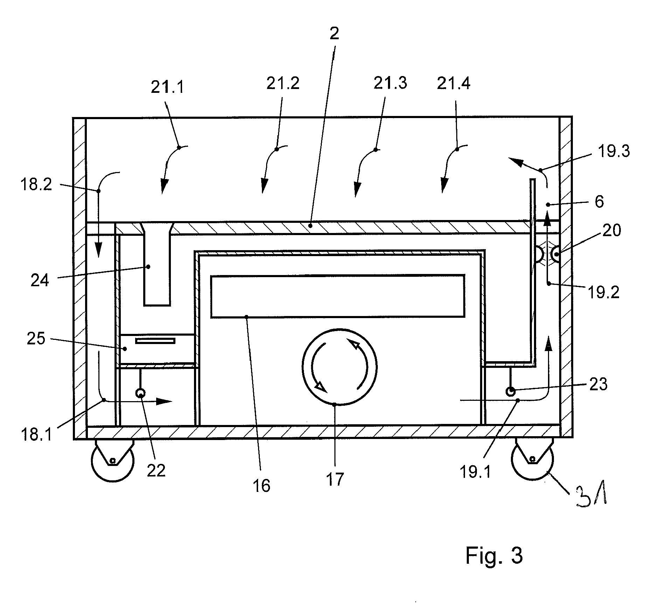

In Figur 3 ist eine geschnittene Seitenansicht der Vorrichtung nach Figur 1 gezeigt. Dort ist unterhalb der Arbeitsplatte 2 ein Verdampfer 16 zu erkennen. Ausserdem ist ein Ventilator 17 in der Weise angeordnet, dass die Luft, wie sie mit den Pfeilen 18.1 und 18.2 angedeutet ist, unter die Arbeitsplatte 2 gezogen wird.

Anschliessend wird die Luft, wie sie mit den Pfeilen 19.1, 19.2, 19.3 schematisch angedeutet ist, wieder von unterhalb der Arbeitsplatte 2 auf die Oberfläche der Arbeitsplatte 2 geleitet.

Bei der Oberfläche der Arbeitsplatte 2 handelt es sich um die Seite der Arbeitsplatte, welche dem Verdampfer 16 abgewandt ist. Die Unterseite der Arbeitsplatte 2 wiederum stellt die dem Verdampfer 16 zugewandte Seite dar.

Die ausströmende Luft, welche über den Luftauslass 6 nach oben auf die Oberseite der Arbeitsplatte 2 geleitet wird, durchläuft ein UV-C-Lufteinkeimungsgerät 20. Hierbei wird die Luft entkeimt. Die Kraft des Ventilators 17 und der Luftauslass 6 ist in der Weise gestaltet, dass im Idealfall die gesamte Arbeitsfläche 2, wie sie mit den Pfeilen 21.1 - 21.4 angedeutet ist, mit kalter Luft versorgt wird.

Die hinein gesogene Luft, wie sie mit den Pfeilen 18.1, 18.2 angedeutet ist, wird durch einen Temperaturfühler 22 aufgezeichnet, wobei der Temperaturfühler 22 neben der Aufnahme der Temperatur der Luft auch die Menge der hineinströmenden Luft messen kann. In gleicher Weise ist ein Temperaturfühler 23 bei der auszublasenden Luft, wie sie mit den Pfeilen 19.1 bis 19.3 schematisch dargestellt ist, vorhanden.

Ausserdem wird auf einen Abwurf 24 für Konfiskat und ein dazugehöriges gekühltes Behältnis 25 hingewiesen. Der Verdampfer 16 bewirkt durch die Anbringung unterhalb der Arbeitsplatte 2 in besonderer Weise, dass nicht nur die durchströmende Luft die Arbeitsplatte 2, sondern auch das Behältnis 25 gekühlt wird.

Weiterhin wird auf einen Luftfilter 26 hingewiesen, welcher anschliessend an den Ventilator 17 angebracht ist. Es handelt sich hierbei um einen so genannten V2A-Filter.

Ausserdem ist ein Aggregat 27 gezeigt, welches den Verdampfer 16 antreibt. Unterhalb des Aggregats 27 ist eine Kondensschale 28 angebracht, welche das Kondenswasser des Aggregats 27 aufnehmen soll und ein einfaches Abführen des Kondenswassers durch Entnahme der Kondensschale 28 und Abkippen des Kondenswassers ermöglicht.

Weiter soll darauf hingewiesen werden, dass die Vorrichtung mit einem festen Abfluss verbindbar ist.

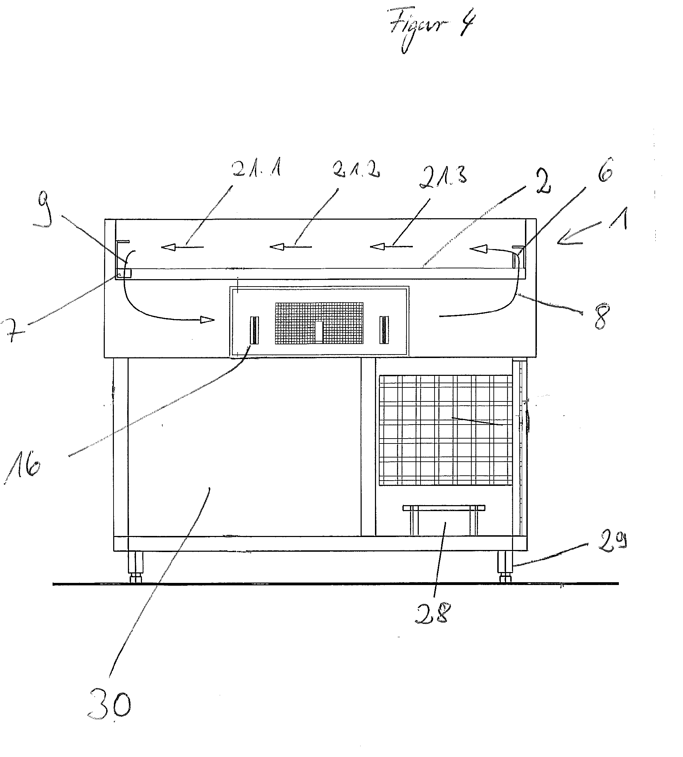

Figur 4 zeigt ein anderes Ausführungsbeispiel der Vorrichtung nach Figur 1. Die Ausführungen, welche für die einzelnen Merkmale der Vorrichtung nach Figur 1 gemacht wurden, sollen auch für dieses Ausführungsbeispiel gelten. Dies insbesondere dann, wenn die gleichen Bezugszeichen genutzt wurden. Es werden die zur Figur 1 gemachten Ausführungen zu den einzelnen mit gleichen Bezugszeichen versehenen Merkmale nicht wiederholt.

Die Besonderheit der Figur 4 liegt in erster Linie darin, dass der Verdampfer 16 direkt unter der Arbeitsplatte 2 angebracht ist. Dadurch ergibt sich eine zusätzliche Staufläche in Form eines Ablagefachs 31. Die unter die Arbeitsplatte 2 hin zum Verdampfer 16 gesogene Luft, in Form des Pfeils 9 wird direkt unter der Arbeitsplatte 2 hin zum Verdampfer 16 geleitet und von dort aus weiter zu der ausgeworfenen Luft, welche mit dem Pfeil 8 angedeutet ist. Auf diese Weise kühlt die umgewälzte Luft auch zusätzlich die Arbeitsplatte 2 von unten. Unten meint hierbei die Seite der Arbeitsplatte 2, welche dem Verdampfer 16 zugewandt ist.

In der Figur 4 weist die Vorrichtung 1 auch eine Anzahl von Standbeinen 30 auf. Diese Standbeine 30 sind nicht zwingend. Die Vorrichtung nach Figur 4 kann in gleicher Weise Rollen ausgestattet sein, wie sie in den Figuren 1 bis 3 gezeigt sind.

Die Pfeile 21.1, 21.2 und 21.3 bilden einen Luftschleier, welche auf der Oberseite der Arbeitsplatte 2, also der Seite, welche dem Verdampfer abgewandt ist, eine kühlende Funktion übernimmt.

Der Luftauslass 6 ist anders als in den Figuren 1 bis 3 in der Weise gestaltet, dass ein Leitblech vorhanden ist, welches teilweise parallel zur Arbeitsplatte 2 verläuft und dadurch eine andere Verteilung der Luft auf der Arbeitsplatte 2 bewirkt. In gleicher Weise ist der Lufteinsog 7 derart gestaltet, dass auch dort ein anderes Leitblech derart gestaltet ist, dass es teilweise parallel zu der Arbeitsplatte 2 angeordnet ist. Dadurch wird die Luft besser unter die Arbeitsplatte 2 hin zu dem Verdampfer 16 geleitet.

### Bezugszeichenliste

| | | | | | |
|---|---|---|---|---|---|
| 1 | Vorrichtung | 34 | | 67 | |
| 2 | Arbeitsplatte | 35 | | 68 | |
| 3 | Eingabebereich | 36 | | 69 | |
| 4 | Tastenfeld | 37 | | 70 | |
| 5 | Temperaturanzeigefeld | 38 | | 71 | |
| 6 | Luftauslass | 39 | | 72 | |
| 7 | Lufteinsog | 40 | | 73 | |
| 8 | Pfeil | 41 | | 74 | |
| 9 | Pfeil | 42 | | 75 | |
| 10 | Arbeitsplatte | 43 | | 76 | |
| 11 | Teilfläche | 44 | | 77 | |
| 12 | Teilfläche | 45 | | 78 | |
| 13 | Luftauslass | 46 | | 79 | |
| 14 | Lufteinsog | 47 | | | |
| 15 | Lufteinsogschlitze | 48 | | | |
| 16 | Verdampfer | 49 | | | |
| 17 | Ventilator | 50 | | | |
| 18 | Pfeile | 51 | | | |
| 19 | Pfeile | 52 | | | |
| 20 | UV-C-Luftentkeimungsgerät | 53 | | | |
| 21 | Pfeile | 54 | | | |
| 22 | Temperaturfühler | 55 | | | |
| 23 | Temperaturfühler | 56 | | | |
| 24 | Abwurf | 57 | | | |
| 25 | Behältnis | 58 | | | |
| 26 | Luftfilter (V2A) | 59 | | | |
| 27 | Aggregat | 60 | | | |
| 28 | Kondensschale | 61 | | | |
| 29 | Standbein | 62 | | | |
| 30 | Ablagefach | 63 | | | |
| 31 | | 64 | | | |
| 32 | | 65 | | | |
| 33 | | 66 | | | |

## Patentansprüche

1. Vorrichtung (1) zur Kühlung von Lebensmitteln
- mit einer Arbeitsplatte (2),
- mit einem Ventilator (17),
- mit einem Verdampfer (16),
**dadurch gekennzeichnet,**
**dass** der Ventilator (17), der Verdampfer (16) und ein UV-C-Luftentkeimungsgerät (20) unterhalb der Arbeitsplatte (2) angebracht ist.

2. Vorrichtung (1) nach Anspruch 1, **gekennzeichnet durch** einen Luftauslass (6), der einen gestuften Auswurf umfasst.

3. Vorrichtung (1) nach einem der Ansprüche 1 oder 2, **gekennzeichnet durch** einen Lufteinsog (7), der einen Lufteinsogschlitz (15.1, 15.2) umfasst.

4. Vorrichtung (1) nach einem der vorigen Ansprüche, **dadurch gekennzeichnet, dass** die Arbeitsplatte (2) abnehmbar und / oder abklappbar ist.

5. Vorrichtung (1) nach einem der vorigen Ansprüche, **dadurch gekennzeichnet, dass** eine Rechnersteuerung zur Aufrechterhaltung einer vorbestimmten Temperatur der Arbeitsplatte (2) und der Luft oberhalb der Arbeitsplatte (2) vorhanden ist.

6. Vorrichtung (1) nach Anspruch 5, **dadurch gekennzeichnet, dass** Rechnersteuerung über einen Eingabebereich (3) bedienbar ist.

7. Vorrichtung (1) nach einem der vorigen Ansprüche, **dadurch gekennzeichnet, dass** ein gekühltes Behältnis (25) für Konfiskat vorhanden ist.

8. Vorrichtung (1) nach Anspruch 7, **gekennzeichnet durch** einen Abwurf (24) für Konfiskat, wobei der Abwurf (24) eine Verbindung zwischen der Arbeitsplatte (2) und dem Behältnis (25) darstellt.

9. Vorrichtung (1) nach einem der vorigen Ansprüche, **gekennzeichnet durch** eine herausnehmbare Kondensschale.

10. Verwendung einer Vorrichtung (1) nach einem der Ansprüche 1 bis 9 als umluftgekühlte Arbeits- / Präsentationsfläche für Fleisch-, Wurst-, Käse-, Fisch-, Obstverarbeitung oder Catering.
